(19) Europäisches Patentamt

European Patent Office

Office européen des brevets

(11) **EP 3 050 716 B1**

(12) **EUROPEAN PATENT SPECIFICATION**

(45) Date of publication and mention
of the grant of the patent:
**24.04.2019 Bulletin 2019/17**

(51) Int Cl.:
***B60C 3/04*** *(2006.01)*    ***B60C 5/00*** *(2006.01)*

(21) Application number: **16153259.3**

(22) Date of filing: **29.01.2016**

(54) **A LATERALLY STABLE PNEUMATIC TIRE**

QUERSTABILER LUFTREIFEN

PNEUMATIQUE LATÉRALEMENT STABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2015 IL 23701415**

(43) Date of publication of application:
**03.08.2016 Bulletin 2016/31**

(73) Proprietor: **Alliance Tire Co. Ltd.
3850001 Hadera (IL)**

(72) Inventor: **HOROVITZ, Gilad
3703608 Pardes-Hanna (IL)**

(74) Representative: **Lampis, Marco et al
Dragotti & Associati Srl
Via Nino Bixio, 7
20129 Milano (IT)**

(56) References cited:
**EP-A1- 0 273 056    GB-A- 1 514 474
US-A- 1 862 269    US-A- 3 851 691**

## Description

### Field of the Invention

The present invention relates to the field of pneumatic tires. More particularly, the invention relates to a laterally stable tire, for use for example with heavy load vehicles such as a truck or van, and particularly for off-road vehicles, such as bulldozers, tractors, harvesters, forestry equipment, and military equipment, or with any other vehicle.

### Background of the Invention

The design of tires for heavy load vehicles is influenced by two contradictory factors. On one hand, the tire has to withstand the relatively high load imposed by the vehicle, and is therefore designed with a relatively large tire width, as measured between the two sidewalls, and with a relatively large diameter. On the other hand, however, the increased tire dimensions results in increased heat buildup that leads to increased wear. Additionally, a prior art tire for heavy load vehicles suffers from inferior lateral stability for resisting cornering forces due to the tire geometry.

Another design consideration for heavy load vehicles is the ability to minimize soil compaction.

Soil is a complex mixture of mineral and organic particles surrounded by pore space. Pore space can make up half the volume of soil, and is filled with water and air. Maintaining aeration porosity is of much importance in order to maintain the health of the soil, particularly for water infiltration, drainage, and exchange of gases. Soil compaction occurs when the soil is compressed, for example during the passage of heavy equipment over the soil, to such a degree that its particles and aggregates are pushed together, and the large pore space is reduced. The reduced pore space causes less oxygen and fewer nutrients to be available to the tree roots. Instead of being drained, rain water stays on top of the soil or becomes surface run off, leading to soil erosion.

Soil compaction may be minimized by increasing the tire contact area, normally referred to as the "footprint", in order to distribute the load over a greater area and to thereby reduce the risk of soil compaction. Prior art attempts to increase the tire footprint involved using wider tires, reducing inflation pressure, or by using larger diameter tires. However, use of a wider or larger diameter tire results in increased wear, as explained above, and use of underinflated tires reduces lateral stability, causing the load to be applied unevenly and the tire to wear unevenly.

The IF and VF tire technology for carrying an increased load at the same inflation pressure has been another prior art attempt to increase the tire footprint area. A dedicated carcass construction enables high deflection, i.e. the ground engaging portion becomes flattened, without excessive heating, while the bead and shoulder area are maintained in a stiffened condition. Although this tire configuration enables increased lateral stability, the relatively low tire pressure induces a wobbling sensation and in turn a varying footprint, which results in uneven wear. This uneven load distribution causes formation of ruts in the ground, further damaging its agricultural potential.

US 1862269 discloses a pneumatic tire having a flat tread and concave sidewalls.

GB 1 514 474 discloses a tire and wheel rim assembly operable without pneumatic pressure having, in cross section, a tire tread wider than any other part of the tire, and substantially straight sidewalls extending from the wheel rim to the tread at an angle ranging from 25 to 70 degrees that are maintained in a precompressed state when mounted on the rim. The rim causes compression of the sidewalls by forcing plate members apart with use of jacking screws.

It is an object of the present invention to provide a tire for heavy load vehicles with good lateral stability and heat dissipation characteristics.

It is another object of the present invention to provide a tire for heavy load vehicles that produces a relatively long and even footprint to minimize soil compaction.

Other objects and advantages of the invention will become apparent as the description proceeds.

### Summary of the Invention

The present invention provides a high deflection and laterally stable pneumatic tire according to claim 1. The tire comprises a trapezoidal structure defined in an unloaded cross section passing through an axis of the tire and delimiting a tire interior, wherein said structure is configured with a tread portion, a widest tire region at or near said tread portion, two opposed, substantially straight sidewalls extending obliquely from a corresponding lateral end of said tread portion, and a bead at a corresponding terminal end of each of said sidewalls which is engageable with a rim of the tire, wherein axial bead spacing between two of said beads and defining a width of said rim is significantly less than a width of said tread portion, so as to generate a footprint which engages an underlying ground surface by a substantially uniform pressure during high deflection conditions.

As referred to herein, axial bead spacing defining a rim width is "less than" a width of said tread portion when the rim width complies with data listed in any one of Tables II-VI hereinbelow, and is "significantly less than" a width of said tread portion when the rim width is less than the range of rim widths for a given tread width that is listed in any one of Tables II-VI.

As referred to herein, the directional terms "lateral" and "axial" may be used interchangeably.

The tread portion is substantially linear and preferably the sidewalls are angularly spaced from the tread portion by an angle of no more than 68.2 degrees. Accordingly, a lateral movement resisting force which is independent of tire pressure is transmittable along one of the sidewalls, from the tread portion to the rim, to resist relative movement between the rim and the tread portion and to provide the tire with self-centering capabilities. The lateral movement resisting force is transmittable along one of the sidewalls, from the tread portion to the rim, upon application of a cornering force onto the tire, upon application of a lateral force onto the tire during advancement along an incline, or upon application of any other force onto the tire in response to driving conditions.

In one aspect, the footprint is stabilized by four spaced support points produced at a ground engageable end of corresponding tensioned bands extending from the tread portion to the rim.

In one aspect, the tire interior has a narrowing zone adjacent to a junction of the widest tire region and the corresponding sidewall by which air compressed by a load applied to the tire is directed to a central region of the tire interior.

According to the invention, the trapezoidal structure dimensionally satisfies the following two relations for an unloaded tire: (1) a partial height of the tire from a periphery of the rim to the widest tire region is greater than, or equal to, 0.55 times a maximum tire height from the rim periphery to a ground engaging edge of the tread portion; and (2) a width of the tire from the rim periphery to the widest tire region is greater than, or equal to, 0.4 times said partial height.

In one aspect, a maximum axial dimension of the tire is increased by no more than 3% of the axial dimension of the tire when unloaded.

The tire is advantageously self-centering during transmission of the lateral movement resisting force when the tire is underinflated and after ceasing to be concentric with the rim. Thus the tire is configured to endure a travel distance of 200 km when inflated to a pressure of 0 bar and traveling at a speed of up to 50 kph, all of which when providing superior lateral stability.

## Brief Description of the Drawings

In the drawings:

- Fig. 1 is a perspective view from the front of a tire in an unloaded condition, according to one embodiment of the present invention;
- Fig. 2 is a perspective view from the front of the tire of Fig. 1 in a deflected condition, schematically illustrating the formation of tensioned bands and showing its unbulging configuration when subjected to high deflection conditions;
- Fig. 3 is a schematic top view of the tire of Fig. 1 with the rim being represented by dashed lines, showing the stabilization of each footprint by four support points;
- Fig. 4 is a schematic cross sectional view of the tire of Fig. 1 which is perpendicular to a plane passing through its axis and substantially parallel to an underlying ground surface, illustrating forces applied to the tire;
- Fig. 5 is a schematic cross sectional view of the tire of Fig. 1 which is perpendicular to a plane passing through its axis and substantially parallel to an underlying ground surface, illustrating dimensional constraints of the tire;
- Fig. 6 is a cross section cut perpendicularly to a plane passing through an axis of a tire of Fig. 1 being in the form of a radial tire and substantially parallel to an underlying ground surface;
- Fig. 7 is an image of a generated pressure profile that is indicative of the load distribution at the footprint of a prior art tire;
- Fig. 8 is an image of a generated pressure profile that is indicative of the load distribution at the footprint of the tire of Fig. 1; and
- Figs. 9a-i are images of the tire of Fig. 1 when mounted on the rim of an off-road vehicle during an underinflated performance test, showing nine different stages, respectively, of tire separation from the rim that demonstrate the self-centering capabilities of the tire.

## Detailed Description of Preferred Embodiments

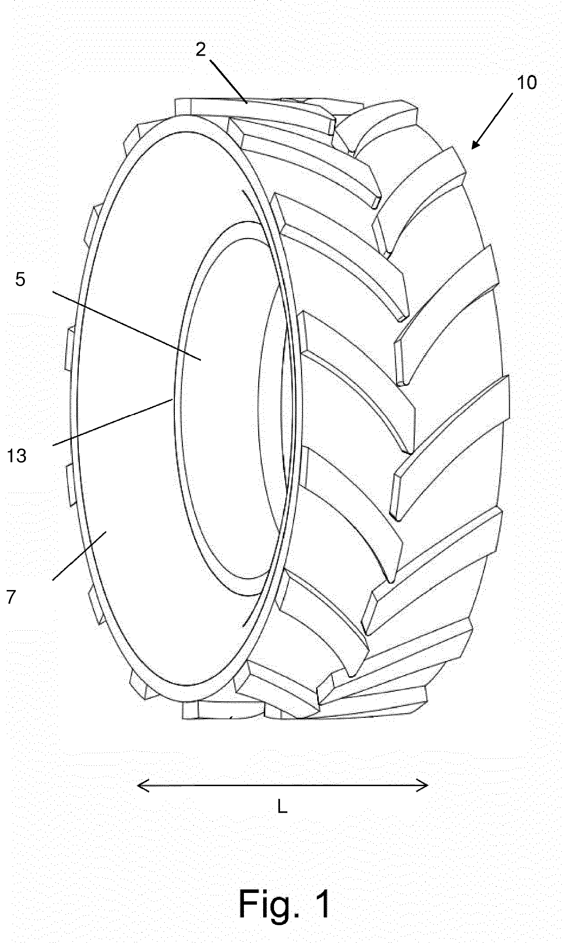

Fig. 1 illustrates a high-deflection pneumatic tire with a surprisingly good lateral stability, generally designated as 10, according to one embodiment of the present invention. Tire 10 is generally used for heavy load vehicles, although it may be used for passenger vehicles or any other vehicles as well.

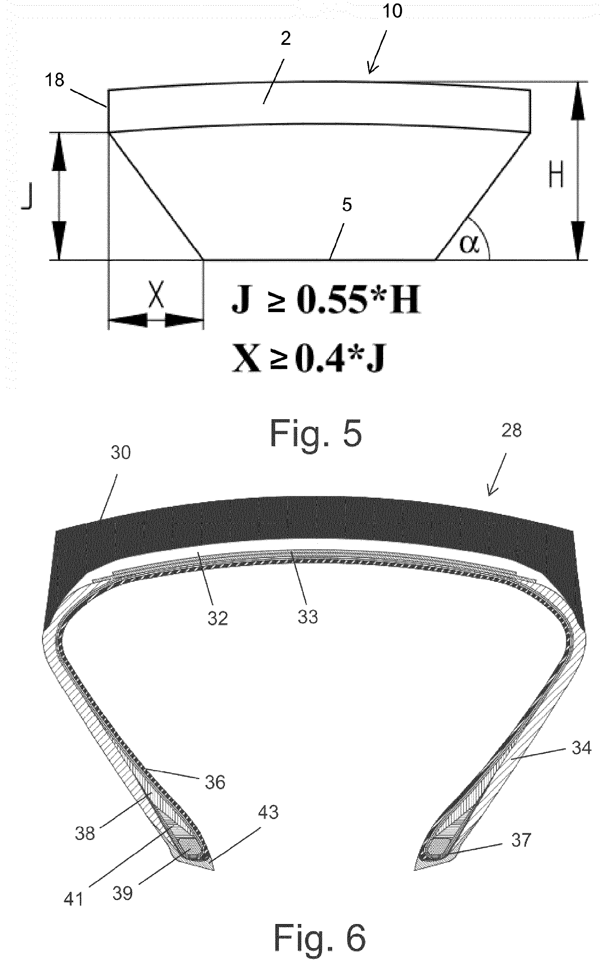

The configuration of tire 10, which may be a radial tire or a bias tire, is significantly different than that of prior art tires. Tire 10 has a substantially linear road engageable tread portion 2 having a width L when unloaded. Sidewall 7 extends obliquely from the shoulder at a corresponding lateral end of tread portion 2 until terminating in a bead 13 that is engageable with complementary recesses of rim 5, such that rim 5 is significantly axially spaced from the tread portion wall, by distance X illustrated in Fig. 5, resulting in a significantly recessed rim.

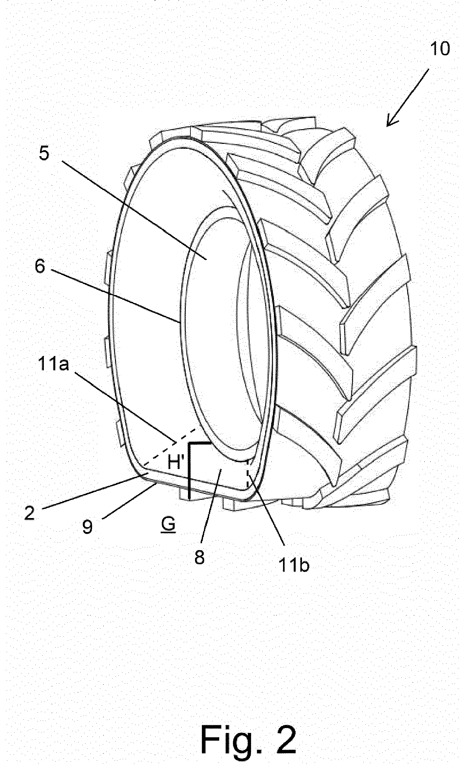

Fig. 2 illustrates tire 10 when in a deflected condition, after being loaded and tread portion 2 brought in engagement with underlying ground surface G is deflected to generate footprint 9. Tread portion 2 is shown to be compressed, and is bounded by two circumferentially spaced tensioned bands 11a and 11b, which are formed in the sidewall and extend from tread portion 2 to rim 5 as a result of the unique tire configuration. A tensioned band is formed at the interface between the flattened tread portion 2 and an uncompressed portion 12 at which the tire returns to its original round shape. The two spaced tensioned bands 11a and 11b urge tread portion 2 to assume its flattened shape.

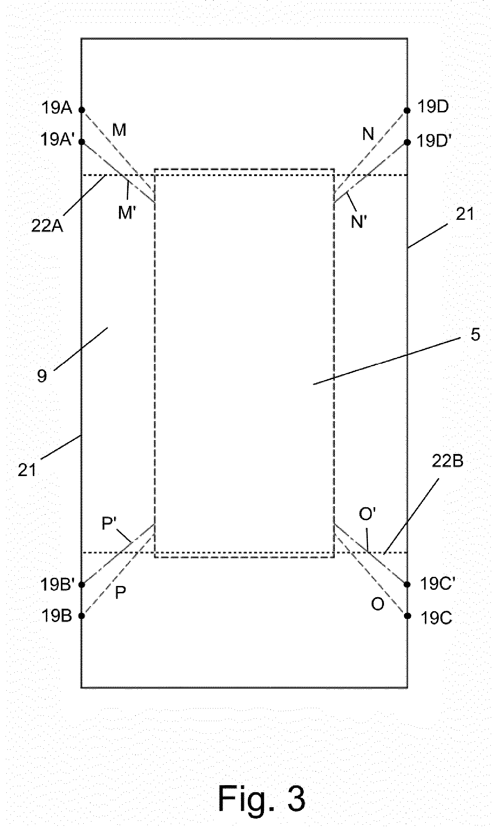

Fig. 3 schematically illustrates a top view of tire 10 such that rim 5 is represented by dashed lines. Footprint 9 is schematically indicated to be bounded between lines 22A-B, each of which extending between the two outer tire edges 21, showing that the footprint is significantly longer than a footprint generated by a prior art tire by virtue of the tire configuration of the present invention. Rim 5 is bounded by two circumferentially spaced, obliquely extending tensioned bands, which contribute to the stability of the tire. Tensioned bands M-P are formed when tire 10 is fully loaded, and tensioned bands M'-P' are formed when tire 10 is partially loaded. The lateral stability is also improved by the four stable support points 19A-D or 19A'-D' that are formed at the ground end of each corresponding tensioned band as tire 10 rotates on top of the underlying ground surface at any given time.

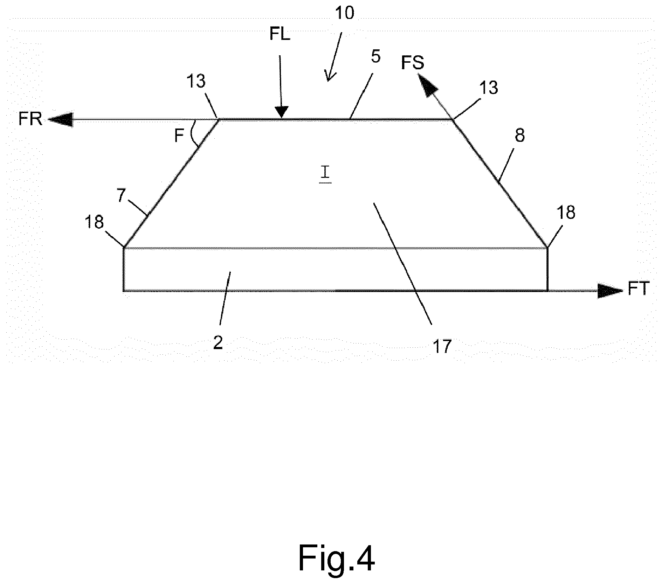

Fig. 4 schematically illustrates a cross section of tire 10. Trapezoidal tire interior I is bounded by tread portion 2, the two sidewalls 7 and 8, and rim 5 after being engaged with beads 13, such that interior I become inflated as air is introduced therein. As opposed to prior art tires that have sidewalls that are significantly curved while attempting to increase the tire volume in order to maximize the load capacity, the sidewalls 7 and 8 of tire 10 are substantially straight as they extend obliquely from the tread portion wall to bead 13. The width of rim 5 is consequently significantly less than the tire width.

The curvilinear tire interior of prior art tires is substantially rectangular such that the widest region of a tire is located at an intermediate height between the tread portion and rim. The air pressure within the tire interior counteracts forces imposed on the tire, including the weight of the vehicle and of its passengers and cornering forces. When the tire is subjected to a high load and high deflection, however, the tire pressure is insufficient to counteract the imposed load and the beads are caused to become closer to the tread portion. Due to the convex sidewalls of a prior art tire which curve outwardly from the tread portion to the widest tire region, an oblique force component acts along the sidewall in a direction towards the widest tire region, which in combination with the force component directed from the beads to the tread portion produces a load derived vector which is applied to the shoulders at a corresponding tread portion-sidewall interface in a laterally outwardly direction. The width of the prior art tire is consequently caused to increase due to the interaction of the shoulders in transmitting the load. After a while, only the shoulder portions grip the underlying ground surface, leading to uneven tire wear, formation of ruts, and reduced lateral stability.

When tire 10 is subjected to a high load, beads 13 are caused to move towards tread portion 2 and sidewalls 7 and 8 are angularly displaced in a direction towards tire interior I. The substantially straight and oblique sidewalls undergoing angular displacement in a rotational direction towards the tire interior resist the compressed air within tire interior I from flowing in a laterally outward direction, and additionally urge the compressed air to remain in a central zone 17 of the tire interior. Consequently the width of an unloaded tire 10 will not increase, allowing the entire length of the footprint to grip the underlying ground surface even though the tire is subjected to high load conditions.

The substantially even footprint provides improved ground engaging capabilities, for example of importance when traveling along agricultural fields, loose terrain such as sand, or along a road.

Fig. 2 illustrates tire 10 when it is subjected to high deflection conditions, when its height H' from the periphery 6 of rim 5 to the ground engaging footprint 9 of tread portion 2, including sidewall 8, as indicated by bold reference lines, is significantly reduced relative to maximum tire height H (Fig. 5) when the tire is unloaded. For example, when tire 10 is mounted on a tractor, height H' is reduced more than 20% of tire height H. Despite the high deflection conditions, tread portion 2 is shown not to appreciably bulge axially from its shoulder. Many prior art tires bulge axially by at least 10% when subjected to high deflection conditions, for example to prevent soil compaction; however, a bulging tire is detrimental to carefully spaced unharvested crop rows due to the damage that is liable to be made to crops at the edge of a row by the bulging tires. In contrast, the width of tire 10 bulges axially by no more than 3% of the tire width L (Fig. 1) when unloaded, to minimize damage to crops located immediately adjacently to a row or to their roots.

The trapezoidal structure is also instrumental in promoting good lateral stability.

When a cornering force is applied by the driver of a vehicle onto a prior art tire having curvilinear sidewalls, an equal and opposite force, often referred to as a lateral force, is transmitted through the tire interior to the sidewall positioned outwardly on the curve traversed by the tire, and then to the underlying ground surface. If a prior art tire were not properly inflated, the lateral forces would not be properly absorbed by the tire interior. The prior art tire would then expand, exhibiting inferior lateral stability such as by wobbling due to the relative movement between the rim and the ground engaging tread portion.

With reference back to Fig. 4, the unique geometrical characteristics of tire 10 whereby substantially straight sidewalls 7 and 8 are angularly spaced from tread portion 2 by an angle F of no more than 68.2 degrees contribute to the transmission of a lateral movement resisting force FS which is independent of tire pressure along sidewall 8, particularly through the interaction of the carcass fixated within the sidewall. Accordingly, when a cornering force FT is applied by the driver of the vehicle onto tire 10 as illustrated, and particularly onto tread portion 2 at sidewall 8, resisting force FS is transmitted along sidewall 8, in addition to the equal and opposite lateral force FR that is transmitted through the tire interior and rim to sidewall 7. The angular disposition of force FS is sufficient to resist the force applied by the compressed air within the tire interior onto sidewall 8 that would normally cause lateral expansion of a prior art tire having a curvilinear sidewall. As sidewall 8 extends between tread portion 2 and rim 5, resisting force FS resists or completely prevents relative movement between rim 5 and tread portion 2, thereby considerably improving lateral stability.

The force applied by the compressed air within the tire interior also counteracts a downwardly directed load FL imposed on tire 10.

The footprint is stabilized by four support points, as shown in Fig. 3, so that the tire is afforded sufficient stability prior to undergoing a cornering operation to maintain the lateral stability during performance of the cornering operation. The stability is further enhanced by the influence of the force FS, as described hereinabove.

With reference now to Fig. 5, it has now been found that while the tires of the invention provide substantial advantages as long as they are configured with:

a) a tread portion;
b) a widest tire region at or near said tread portion;
c) two opposed, substantially straight sidewalls extending obliquely from a corresponding lateral end of said tread portion; and
d) a bead at a corresponding terminal end of each of said sidewalls which is engageable with a rim of the tire, wherein axial bead spacing between two of said beads and defining a width of said rim is significantly less than a width of said tread portion,

so as to generate a footprint which engages an underlying ground surface by a substantially uniform pressure during high deflection conditions,
each tire 10 promotes superior lateral stability while producing a substantially even footprint when the following two conditions are met, for an unloaded tire:

$$(1) \qquad J \geq 0.55 * H$$

$$(2) \qquad X \geq 0.4 * J,$$

where H is the maximum height of the tire from the periphery of rim 5 to the ground engaging edge of tread portion 2, J is the partial height of the tire from the periphery of rim 5 to widest tire region 18, and X is the distance of the tire width from the periphery of rim 5 to widest tire region 18.

These two conditions define a minimum sidewall slope $\alpha$, equal to X/J, of 0.4 needed to generate a sufficiently high lateral movement resisting force while taking into account the possibility of a tire configuration having a widest tire region which does not coincide with the tread portion. It should be noted that the oblique sidewall has a substantially straight configuration which complies with these two conditions.

These geometrical features of tire 10 are able to be achieved when the rim width, as defined by the axial bead spacing, is significantly less than the required rim width needed by a prior art tire having the same maximum tire width.

Table I lists the maximum rim factor of the inventive tire for various values of the aspect ratio, defined as maximum tire height divided by maximum tire width. A rim factor is equal to the rim width divided by the maximum tire width.

**Table I**

| Inventive Tire | |
| --- | --- |
| **Nominal Aspect Ratio (AR)** | **Rmax** |
| 65 | 0.71 |
| 60 | 0.74 |
| 55 | 0.76 |
| 50 | 0.78 |
| 45 | 0.80 |

(continued)

| Inventive Tire | |
|---|---|
| Nominal Aspect Ratio (AR) | Rmax |
| 40 | 0.82 |
| 35 | 0.85 |
| 30 | 0.87 |

The value of maximum rim factor Rmax is calculated based on the following relation:

$$R_{\max} = \frac{SW - 0.44 * AR * SW}{SW} \tag{3}$$

where Rmax is the maximum rim factor, AR is the aspect ratio, and SW is the maximum tire width.

Rmax is based on extreme conditions of the aforementioned conditions (1) and (2), namely when J = 0.55 * H and X = 0.4 * J. X is thus equal to (0.4) * (0.55) * H. Since H is equal to AR * SW, X is equal to 0.22 * AR * SW. The rim width is accordingly equal to SW - (2 * X).

As a comparison between the rim width for use by the inventive tire and the rim width of prior art tires having the same maximum tire width, Tables II-VI representing standardized values are set forth hereinbelow.

Tables II-VI list data specified by the European Tyre and Rim Technical Organisation (ETRTO) in its Design Guide of 2015 for calculating the required rim width of a prior art tire. The specified data is in the form of a rim factor. The required rim width for prior art tires can therefore be obtained by multiplying a tire width by the corresponding rim factor.

As can be clearly seen, the maximum rim factor Rmax that complies with the geometrical constraints of the inventive tire is invariably less than the standardized maximum rim factor set forth in Tables II-VI.

**Table II**

| ETRTO Values Passenger Car Tires | |
|---|---|
| Nominal Aspect Ratio | Measuring Rim |
| 95 | 0.70 |
| 90 | 0.70 |
| 85 | 0.70 |
| 80 | 0.70 |
| 75 | 0.70 |
| 70 | 0.75 |
| 65 | 0.75 |
| 60 | 0.75 |
| 55 | 0.80 |
| 50 | 0.80 |
| 45 | 0.85 |
| 40 | 0.90 |
| 35 | 0.90 |
| 30 | 0.90 |
| 25 | 0.92 |
| 20 | 0.92 |

Table III

| ETRTO Values<br>Commercial Vehicle Tires | |
| --- | --- |
| **Nominal Aspect Ratio and Tire Type** | **Measuring Rim** |
| '40' Series Tires on 5° DC Rims | 0.90 |
| '45' Series Tires on 5° DC Rims | 0.85 |
| '50' and '55' Series Tires on 5° DC Rims | 0.80 |
| '60' Series Tires on 5° DC Rims | 0.75 |
| '65' Series Tires on 5° DC Rims | 0.75 |
| '70' Series Tires on 5° DC Rims | 0.75 |
| '75' Series and above on 5° Tapered or Flat Base Rims | 0.70 |
| Ultra Light Sizes | 0.70 |
| 15° DC Rims-Code Designated Sizes | 0.75 |
| 15° DC Rims- Metric Sizes | |
| $\geq 70$ | 0.75 |
| 65 | 0.75 |
| 60 | 0.80 |
| 55 | 0.80 |
| 50 | 0.80 |
| 45 | 0.85 |
| 40 | 0.85 |
| Multipurpose Tires on 5° Rims | 0.80 |

**Table IV**

| ETRTO Values<br>Agriculture Equipment Tires | |
| --- | --- |
| **Tire Type** | **Theoretical Rim** |
| Tractor, Construction Application and Forestry Tires | |
| Traction Wheel Tires (Diagonal + Radial) | 0.87 |
| Traction Wheel Metric Tires on 15° drop center rims | 0.80 |
| Implement and Garden Tractor Tires (Diagonal + Radial) | |
| Metric and Code Designated Sizes ('100', '95' and'90' Series) | 0.60 |
| Low Section Sizes/ Code Designated Sizes | 0.70 |
| Metric Series Sizes ('40' to '85' Series on 5° rim) | 0.80 |
| Metric Series Sizes ('35' Series and below on 15° rim) | 0.85 |
| Metric Series Sizes ('40' to '85' Series on 15° rim) | 0.80 |

**Table V**

| ETRTO Values Industrial and Lift Truck Pneumatic Tires | | | | |
|---|---|---|---|---|
| Nominal Tire Width (mm) | Measuring Rim Width Code (in) | Design Section Width (mm) | Approved Rim Contours (in) | |
| | | | Min. | Max |
| Rim Factor R | 0.75 | 0.75 | 0.70 | 0.80 |
| 200 | 6.00 | 201 | 5.25 | 6.00 |
| 220 | 6.75 | 203 | 6.00 | 6.75 |
| 240 | 6.75 | 237 | 6.75 | 7.50 |
| 260 | 7.50 | 258 | 7.50 | 8.25 |
| 280 | 8.25 | 280 | 7.50 | 9.00 |
| 300 | 9.00 | 301 | 8.25 | 9.75 |
| 320 | 9.75 | 323 | 9.00 | 9.75 |
| 340 | 9.75 | 337 | 9.75 | 10.50 |
| 360 | 10.50 | 359 | 9.75 | 11.75 |
| 380 | 11.75 | 385 | 10.50 | 11.75 |
| 400 | 11.75 | 399 | 10.50 | 12.25 |

**Table VI**
**ETRTO Values**
**Earthmoving Equipment Tires**

Rim Factor R   = 0.70 for '95' Series or Narrow Base Tire Sizes

= 0.80 for '80' Series or Wide Base Tire Sizes

= 0.80 for '65' and '70' Series Tire Sizes

As may be appreciated from the description above, the uniquely configured tire of the present invention demonstrates good performance in terms of its ability to handle a relatively high cornering force by virtue of its superior lateral stability, and at the same time minimizes soil compaction by producing a relatively long and even footprint to engage the underlying ground surface by a substantially uniform pressure even during high deflection conditions. The tire has particular utility for heavy load vehicles, prior art tires for which being unknown to have both high lateral stability and an even footprint, although it is also suitable for passenger vehicles or any other type of vehicle as well.

Despite its unique geometrical characteristics, the tire of the present invention may have the same structure as a counterpart prior art tire, whether a radial tire, a bias tire or a bias belted tire. When the tire is a radial tire, for example, a tire 28 comprises, as illustrated in Fig. 6, the tread 30, under tread 32, belts 33, various plies of sidewall 34 including an inner liner 36, soft filler 38, and portions of bead 37 including hard filler 39, textile chafer 41, and rubber chafer 43. Accordingly, the tire may be economically manufactured using standardized processes and machinery and widespread materials.

The tire of the present invention will be specifically described hereinafter by using examples so as to confirm the effects thereof. The present invention is not limited to these examples.

**Example 1**

**Footprint Test**

The load distribution at the footprint was tested using a loading machine that applied a vertical load onto a tire mounted on a rim under steady-state and free-rolling conditions. The tires were tested at various inflation pressures and loads. When the internal tire pressure was 2.8 bar, the vertical load was varied from 6150 kg to 9250 kg. The test was repeated at pressures of 3.2 bar, 3.6 bar and 3.8 bar with the same variation in load.

The pressure profile of each tire was generated by an IX500 sensor manufactured by XSENSOR Technology Corporation, Calgary, Canada. Due to the large number of sensing points, the change in contact pressure across the width of the tire with the underlying surface was able to be assessed. A dedicated software module graded and color coded each pressure reading, to provide a graphical representation of the pressure profile. The highest pressure was coded red and the lowest pressure was coded blue, with various colors such as green and yellow therebetween.

The color coded pressure profile was converted to a black and grey representation thereof, and the relative position of three colors that were generated on the original color coded pressure profile are indicated: red (R), yellow (Y) and blue (B).

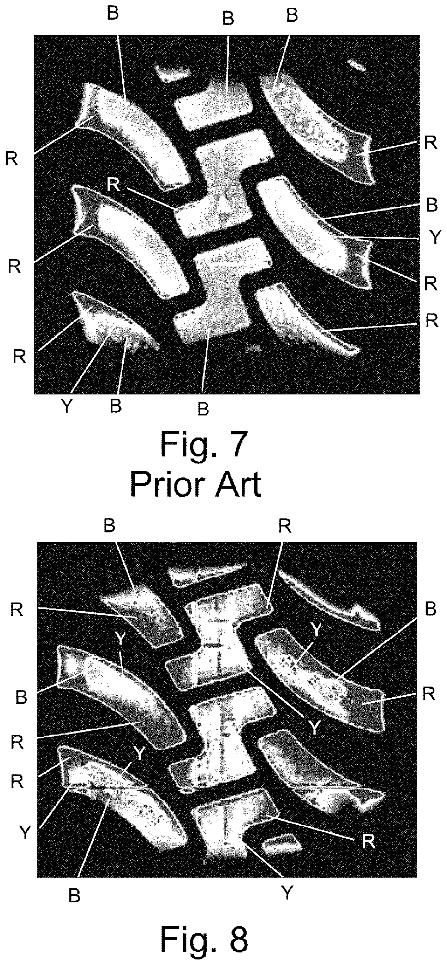

Fig. 7 illustrates the load distribution of a prior art VF650/55R26.5 tire, and Fig. 8 illustrates the load distribution of a tire configured according to the teachings of the invention, yet having the same VF650/55R26.5 dimensions. During this test, both tires were subjected to the same load of 9250 kg and inflation pressure of 2.8 bar. The inventive tire of Fig. 8 was made from converted regular tire mold, i.e. the mold tread area was substantially uniform.

As can be readily seen, the prior art tire of Fig. 7 experienced an uneven pressure distribution, such that the central tread regions were subjected to a low contact pressure associated completely entirely with a blue code, while the shoulder areas carried most of the load as evidenced by the red code. The central regions of the inventive tire of Fig. 8, in contrast, carried a proportionally larger portion of the load, as indicated by the yellow and red codes, contributing to a substantially uniform pressure and a reduction in soil compaction.

## Example 2

### Underinflated Performance Test

The ability of the inventive tire to maintain its stability when deflated or punctured was tested. The ability of a deflated or punctured tire to maintain lateral stability is of great significance for military, commercial and off-road usage.

For this test, four 340/65R22.5 tires were mounted on the corresponding rims having a size of 6.00 x 22.5 of the Zibar MK2 4 x 4 off-road vehicle manufactured in Israel. The tires had a diameter of 1001 mm, a tire width of 315 mm and an Alliance 550 tread design. The construction of these tires included two plies of polyester at each sidewall, and two polyester plies and two steel plies at the tread. The tires were inflated at a pressure that varied from 1.2 to 0 bar, and the vehicle was driven along various types of terrain including a gravel road, a paved road, rocky terrain, loose gravel terrain and a soil/gravel pile.

Even at a low inflation pressure of 4 psi, the vehicle was able to perform all desired off-road activities, including advancing at fast speeds of over 60 kph, cornering on greatly uneven terrain, and advancing and reversing at steep inclines, e.g. 60 degrees with respect to the horizontal, such that only the sky, and not any surrounding terrain, was visible during the maneuver.

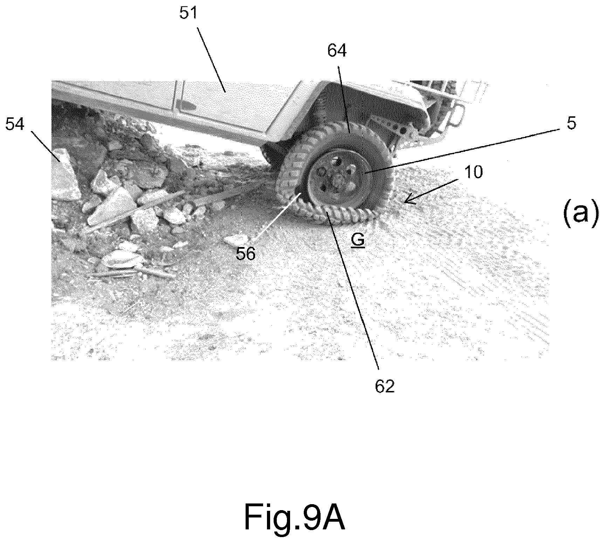

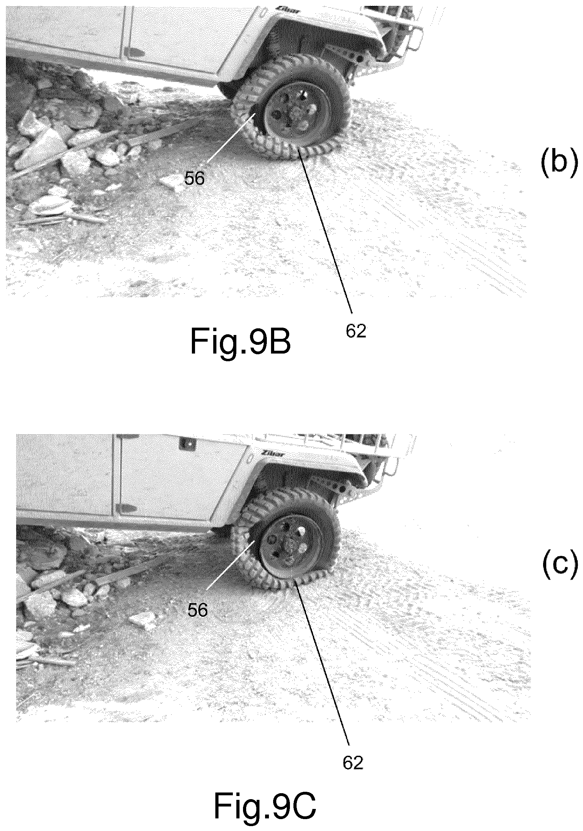

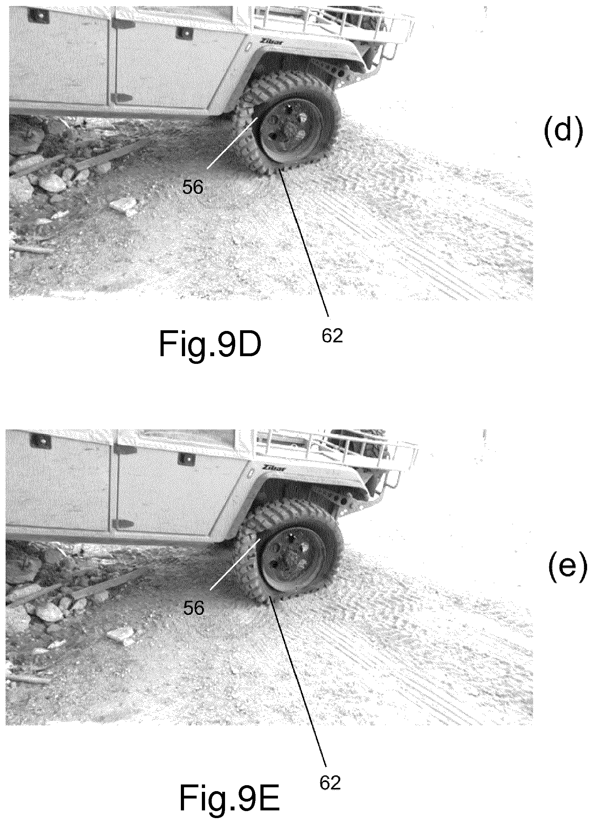

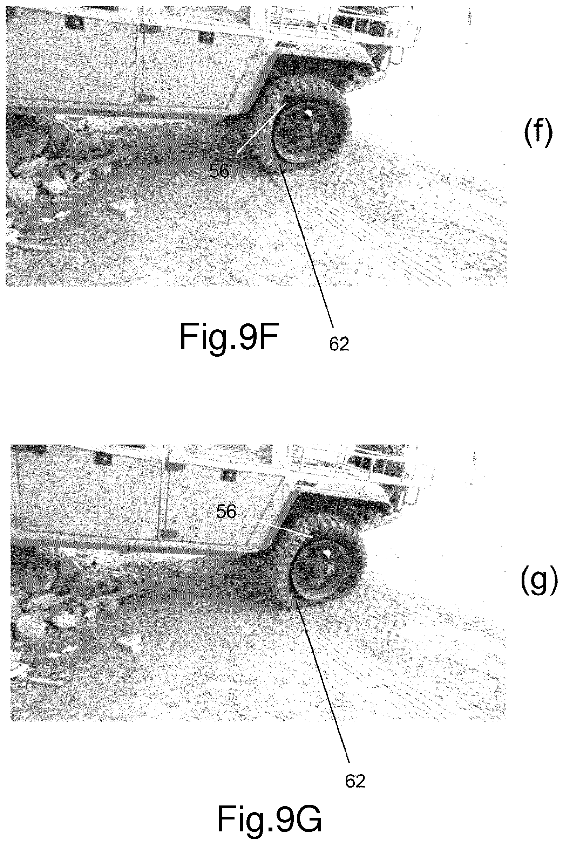

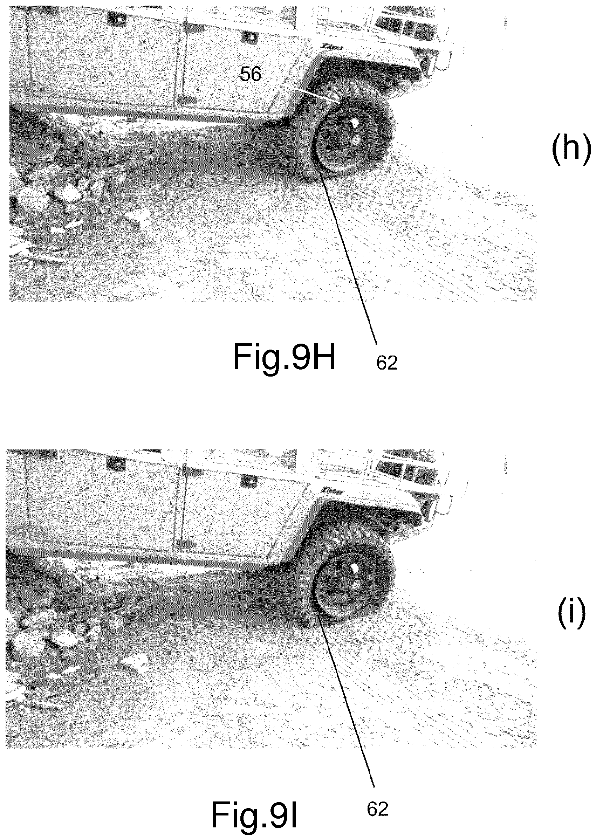

An airless performance test was then performed by reducing the tire inflation to 0 bar. The tires continued to support the vehicle during various off-road activities. During an extreme maneuver that was intended to deform the tire in order to observe the ability of the tire to be self-centered after ceasing to be concentric with the rim, one of the tires was caused to spin and then slip on the rim until the tread portion folded outwardly as shown in Fig. 9a. As a result of this extreme maneuver, one of the beads of this tire became loosely, rather than securely, attached to the rim, while remaining within the confines of a corresponding rim recess.

Figs. 9a-i illustrate nine different stages, respectively, of tire separation from rim 5 while vehicle 51 continued a climbing maneuver along a gravel pile 54.

In Fig. 9a, tire 10 is shown to be flat while a portion of the bead is loosely attached to rim 5 to form non-contact zone 56 between the bead and rim. Due to the loose attachment of the bead portion, tread portion 62 adjacent to non-contact zone 56 and in contact with the underlying ground surface G becomes misshaped to resemble the caterpillar tracks of a tank. At this starting stage, the misshaped tread portion 62 laterally extends from rim 5 by a significantly greater extent than that of upper tread portion 64, which is diametrically spaced from tread portion 62 and whose corresponding bead portion is securely engaged with rim 5.

While the rotating rim 5 is in engagement with the sidewall of the flattened tire 10 that is contacted by underlying ground surface G, the circumferential position of non-contact zone 56 relative to ground surface G changes approximately 90 degrees from Fig. 9a to Fig. 9h. The circumferential length of non-contact zone 56 increased from Fig. 9b to 9c, but gradually decreased from Fig. 9d to 9h. At the same time, the bulging, laterally protruding dimension of ground-contacted tread portion 62 gradually decreases from Fig. 9a to Fig. 9h until it is substantially equal to that of rim 5.

These effects are in contrast to the performance of any prior art, completely deflated tire whose bead is loosely attached or partially unseated and continues to rotate, whereby tire rotation will cause complete unseating of the bead and additional deformation of the tire.

Finally, the flattened inventive tire 10 surprisingly demonstrated self-centering capabilities, by which the non-contact zone was rendered nonexistent in Fig. 9i after the former loosely attached bead portion became securely attached to rim 5 and the tire regained its circular contour with the exception of course of the flattened ground-contacted tread portion 62. This self-centering capability was made possible by virtue of the unique geometrical characteristics of tire 10 and the lateral movement resisting force that was transmitted along the sidewall.

## Example 3

### Airless Endurance Test

An airless inventive tire was subjected to an endurance test in order to determine an expected distance that a punctured tire could safely travel.

During the endurance test, a hydraulic piston pressed the tire against a spinning steel wheel having a diameter of 1.7 m whose axle was parallel to the axle of the inventive tire, to simulate tire loading at road conditions. The inventive tire was deflated to a pressure of 0 bar and was loaded by the piston at a constant load of 2000 kg. At a constant tested speed of 50 kph, the inventive tire was found to remain intact and on the rim under these laboratory conditions for a number of rotations corresponding to a travel distance of 200 km. A crack developed in the sidewall of the inventive tire after a travel distance of 200 km.

The inventive tire providing lateral stability, when airless, is therefore expected to safely support a vehicle with superior lateral stability for a travel distance of at least 200 km and at a speed of at least 50 kph, a feature that has important safety related ramifications for military vehicles, police vehicles and ambulances. This airless performance is afforded by a tire that is mounted on a standard rim and is economically manufactured using standardized processes, as opposed to prior art run-flat tires that require the addition of specialized safety aids and/or a dedicated rim to significantly increase their cost.

While some embodiments of the invention have been described by way of illustration, it will be apparent that the invention can be carried out with many modifications, variations and adaptations, and with the use of numerous equivalents or alternative solutions that are within the scope of persons skilled in the art, without exceeding the scope of the claims.

## Claims

**1.** A high deflection and laterally stable pneumatic tire (10, 28), comprising a trapezoidal structure defined in an unloaded cross section passing through an axis of the tire and delimiting a tire interior (I), wherein said structure is configured with

a) a tread (2, 30, 62) having a substantially linear ground engageable surface;
b) a widest tire region (18) at or near said tread portion;
c) two opposed substantially straight sidewalls (7, 8); and
d) a bead (13, 37) at a corresponding terminal end of each of said sidewalls which is engageable with a rim (5) of the tire, wherein axial bead spacing between two of said beads and defining a width of said rim is less than a width (L) of said tread portion, so as to generate a footprint (9) which engages an underlying ground surface (G) by a substantially uniform pressure during high deflection conditions,

wherein the tread (2, 30, 62) has two opposed substantially straight, lateral terminal walls such that the substantially linear ground engageable surface extends between said two lateral walls and the widest tire region (18) is at or near said two lateral walls of the tread, each of said two lateral terminal walls having a radially outward portion coinciding with the ground engageable surface and a radially inward portion,
wherein the sidewalls (7, 8) extend obliquely from the radially inward portion of a corresponding one of said two substantially straight, lateral walls of the tread to said corresponding bead (13, 37), wherein the two substantially straight sidewalls are uncompressed, when the tire is mounted on the rim and unloaded, and wherein the trapezoidal structure dimensionally satisfies the following two relations for an unloaded tire:

(1) a partial height (J) of the tire from a periphery of the rim to the widest tire region (18) is greater than, or equal to, 0.55 times a maximum tire height (H) from the rim periphery to a ground engaging edge of the tread (2, 30, 62); and
(2) a width (X) of the tire from the rim periphery to the widest tire region is greater than, or equal to, 0.4 times said partial height, wherein, when the tire is mounted on the rim, one of said oblique and substantially straight sidewalls (8) which is subjected to a lateral movement resisting force (FS) being transmitted from said tread to said rim upon application of a lateral force (FT) onto the tire (10, 28) is able to resist a lateral movement causing force applied by compressed air within said tire interior and to resist relative movement between said rim and said tread.

2. The pneumatic tire according to claim 1, wherein the sidewalls (7, 8) are angularly spaced from the tread (2, 30, 62) by an angle (F) of no more than 68.2 degrees.

3. The pneumatic tire according to claim 1, wherein the footprint (9) is stabilized by four spaced support points (19A-D, 19A'-D') formed at a ground engageable end of corresponding tensioned bands (M-P, M'-P'), each of said tensioned bands continuously extending through one of the sidewalls (7,8) from the tread (2, 30, 62) to the rim (5).

4. The pneumatic tire according to claim 1, wherein the tire interior (I) has a narrowing zone adjacent to a junction of the widest tire region (18) and the corresponding sidewall (7, 8) by which air compressed by a load (FL) applied to the tire (10, 28) is directed to a central region (17) of the tire interior.

5. The pneumatic tire according to claim 1, wherein a maximum axial dimension of the tire, when the tire is mounted on the rim and subjected to high deflection conditions, is increased by no more than 3% of the width (L) of the tread when unloaded.

6. The pneumatic tire according to claim 1, which is a heavy load, off-road pneumatic tire capable of supporting a load of at least 2000 kg and for being mounted on rims of at least 22.5 inches in diameter.

**Patentansprüche**

1. Hoch biegsamer und seitlich stabiler pneumatischer Reifen (10, 28), welcher eine trapez-förmige Struktur aufweist, die in einem nicht-belasteten Querschnitt definiert ist, der durch eine Achse des Reifens verläuft und ein Reifeninneres (I) abgrenzt, worin die Struktur ausgestaltet ist mit

a) einer Lauffläche (2, 30, 62) mit einer im Wesentlichen linearen, mit dem Boden in Eingriff kommenden Oberfläche;
b) einem weitesten Reifenbereich (18) bei oder nahe des Laufflächen-Bereichs;
c) zwei abgewandten, im Wesentlichen geraden Seitenwände (7, 8); und
d) einer Verstärkung (13, 37) an einem entsprechenden terminalen Ende einer jeden Seitenwand, die mit einer Felge (5) des Reifens in Eingriff kommen kann, worin der axiale Abstand zwischen zwei der Verstärkungen, der eine Weite der Felge definiert, Kleiner ist als eine Weite (L) des Laufflächen-Bereichs, um so einen Abdruck (9) zu erzeugen, der mit einer darunter liegenden Bodenfläche (G) über einen im Wesentlichen einheitlichen Druck während hohen Biege-Bedingungen in Eingriff kommt, worin die Lauffläche (2, 30, 62) zwei abgewandte im Wesentlichen gerade, seitliche Endwände aufweist, so dass sich die im Wesentlichen lineare, mit dem Boden in Eingriff kommende Oberfläche zwischen den zwei Seitenwänden erstreckt, worin der weiteste Reifenbereich (18) bei oder nahe zu den zwei Seitenwänden der Lauffläche ist, worin jeder der zwei seitlichen terminalen Wände einen radial nach aussen gewandten Bereich aufweist, der mit der mit dem Boden in Eingriff kommenden Oberfläche zusammenfällt, und einen radial nach innen gewandten Bereich,

worin sich die Seitenwände (7, 8) von dem radial nach innen gerichteten Bereich einer der zwei im Wesentlichen geraden Seitenwände der Lauffläche schräg zu der entsprechenden Verstärkung (13, 37) erstreckt,
worin die zwei im Wesentlichen geraden Seitenwände nicht komprimiert sind, wenn der Reifen auf der Felge montiert und nicht-belastet ist, und
worin die Trapez-förmige Struktur hinsichtlich der Dimensionen den folgenden zwei Verhältnissen für einen nicht-belasteten Reifen genügt:

(1) eine Teil-Höhe (J) des Reifens von einem Umfang der Felge zu dem weitesten Reifenbereich (18) ist größer als, oder gleich 0,55 mal einer maximalen Reifenhöhe (H) von dem Felgenumfang zu einer mit dem Boden in Kontakt tretenden Kante der Lauffläche (2, 30, 62); und
(2) eine Weite (X) des Reifens von dem Felgenumfang zu dem weitesten ReifenBereich ist größer als oder gleich 0,4 mal der Teilhöhe,

worin, wenn der Reifen auf der Felge befestigt ist, eine der schrägen und im Wesentlichen geraden Seitenwand

EP 3 050 716 B1

(8), die einer von der Lauffläche zu der Felge bei Anwenden einer lateralen Kraft (FT) auf den Reifen (10, 28) übertragenen seitlichen Bewegungswiderstandskraft (FS) unterworfen wird, einer eine seitliche Bewegung verursachenden Kraft widerstehen kann, die durch komprimierte Luft in dem Reifeninneren ausgeübt wird, und einer relativen Bewegung zwischen der Felge und der Lauffläche widerstehen kann.

2. Pneumatischer Reifen nach Anspruch 1, worin die Seitenwände (7, 8) winklig von der Lauffläche (2, 30, 62) um einen Winkel (F) von nicht mehr als 68,2 Grad beabstandet sind.

3. Pneumatischer Reifen nach Anspruch 1, worin der Abdruck (9) durch vier beabstandete Trägerpunkte (19A-D, 19A'-D') stabilisiert wird, die an einem mit einem Boden in Kontakt tretenden Ende der entsprechenden Bänder (M-P, M'-P') ausgebildet sind, worin sich jedes der zugbeanspruchten Bänder kontinuierlich durch eine der Seitenwand (7, 8) von der Lauffläche (2, 30, 62) zu der Felge (5) erstreckt.

4. Pneumatischer Reifen nach Anspruch 1, worin das Reifeninnnere (I) einen sich verjüngenden Bereich neben einer Verbindung des weitesten Reifenbereichs (18) aufweist und worin die entsprechende Seitenwand (7, 8), durch die Luft, die durch eine auf den Reifen (10, 28) ausgeübte Last (FL) komprimiert wurde, zu einem zentralen Bereich (17) des Reifeninneren gelenkt wird.

5. Pneumatischer Reifen nach Anspruch 1, worin eine maximale axiale Abmessung des Reifens, wenn der Reifen auf der Felge befestigt und hohen Biegungs-Bedingungen unterworfen ist, um nicht mehr als 3% der Weite (L) der Lauffläche erhöht ist, wenn keine Last vorhanden ist.

6. Pneumatischer Reifen nach Anspruch 1, welcher ein pneumatischer Schwerlast, off-Road Reifen ist, der eine Last von mindestens 2000 kg tragen kann und der auf Felgen montiert werden kann, die einen Durchmesser von mindestens 22,5 Inch aufweisen.


**Revendications**

1. Pneu à haute déflexion et latéralement stable (10, 28) comprenant une structure trapézoïdale définie dans une section transversale non chargée passant par un axe du pneu et délimitant un intérieur de pneu (I), dans lequel ladite structure est configurée avec :

    a) une bande roulement (2, 30, 62) ayant une surface de mise en prise avec le sol sensiblement linéaire ;
    b) la région la plus large du pneu (18) au niveau de ou à proximité de ladite partie de bande de roulement ;
    c) deux parois latérales sensiblement droites (7, 8) ; et
    d) un talon (13, 37) au niveau d'une extrémité terminale correspondante de chacune desdites parois latérales qui peut se mettre en prise avec une jante (5) du pneu, dans lequel l'espacement de talon axial entre deux desdits talons et définissant une largeur de ladite jante est inférieur à une largeur (L) de ladite partie de bande de roulement, afin de générer une empreinte (9) qui met en prise une surface de sol sous-jacente (G) par une pression sensiblement uniforme pendant des conditions de haute déflexion,

dans lequel la bande de roulement (2, 30, 62) a deux parois terminales latérales sensiblement droites opposées de sorte que la surface de mise en prise avec le sol sensiblement linéaire s'étend entre lesdites deux parois latérales et la région la plus large du pneu (18) est au niveau de ou à proximité desdites deux parois latérales de la bande de roulement, chacune desdites deux parois terminales latérales ayant une partie radialement vers l'extérieur coïncidant avec la surface de mise en prise avec le sol et une partie radialement vers l'intérieur, dans lequel les parois latérales (7, 8) s'étendent obliquement à partir de la partie radialement vers l'intérieur d'une paroi correspondante desdites deux parois latérales sensiblement droites de la bande de roulement jusqu'audit talon (13, 37) correspondant, dans lequel les deux parois latérales sensiblement droites ne sont pas comprimées, lorsque le pneu est monté sur la jante et non chargé, et dans lequel la structure trapézoïdale satisfait de manière dimensionnelle les deux relations suivantes pour un pneu non chargé :

    (1) une hauteur partielle (J) du pneu allant d'une périphérie de la jante jusqu'à la région la plus large du pneu (18) est supérieure à ou égale à 0,55 fois une hauteur de pneu maximum (H) allant de la périphérie de jante jusqu'à un bord de mise en prise avec le sol de la bande de roulement (2, 30, 62) ; et
    (2) une largeur (X) du pneu allant de la périphérie de jante jusqu'à la région la plus large du pneu est supérieure à ou égale à 0,4 fois ladite hauteur partielle,

dans lequel, lorsque le pneu est monté sur la jante, l'une desdites parois latérales obliques et sensiblement droites (8) qui est soumise à une force de résistance de mouvement latéral (FS) étant transmise de ladite bande de roulement à ladite jante suite à l'application d'une force latérale (FT) sur le pneu (10, 28) est capable de résister à un mouvement latéral provoquant la force appliquée par l'air comprimé à l'intérieur dudit pneu et de résister au mouvement relatif entre ladite jante et ladite bande de roulement.

2.  Pneu selon la revendications 1, dans lequel les parois latérales (7, 8) sont angulairement espacées de la bande de roulement (2, 30, 62) par un angle (F) non supérieur à 68,2 degrés.

3.  Pneu selon la revendications 1, dans lequel l'empreinte (9) est stabilisée par quatre points de support espacés (19AD, 19A'-D') formés au niveau d'une extrémité pouvant se mettre en prise avec le sol des bandes tendues (M-P, M'-P') correspondantes, chacune desdites bandes tendues s'étendant de manière continue à travers l'une des parois latérales (7, 8) de la bande de roulement (2, 30, 62) à la jante (5).

4.  Pneu selon la revendications 1, dans lequel l'intérieur du pneu (I) a une zone de rétrécissement adjacente à une jonction de la région la plus large du pneu (18) et la paroi latérale (7, 8) correspondante par laquelle l'air comprimé par une charge (FL) appliquée sur le pneu (10, 20) est dirigé vers une région centrale (17) de l'intérieur du pneu.

5.  Pneu selon la revendications 1, dans lequel une dimension axiale maximum du pneu, lorsque le pneu est monté sur la jante et soumis aux conditions de haute déflexion, est augmentée selon une valeur non supérieure à 3% de la largeur (L) de la bande de roulement lorsqu'il n'est pas chargé.

6.  Pneu selon la revendications 1, qui est un pneu tout-terrain pour charge lourde capable de supporter une charge d'au moins 2000 Kg et pour être monté sur des jantes d'au moins 22,5 pouces de diamètre.

Fig. 1

14

Fig. 2

Fig. 3

Fig.4

$$J \geq 0.55*H$$

$$X \geq 0.4*J$$

Fig. 5

Fig. 6

Fig. 7
Prior Art

Fig. 8

Fig.9A

(b)

Fig.9B          62

(c)

Fig.9C

(d)

Fig.9D    62

(e)

Fig.9E    62

(f)

Fig.9F

56

62

(g)

56

62

Fig.9G

56

(h)

Fig.9H    62

(i)

Fig.9I    62

**EP 3 050 716 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1862269 A

- GB 1514474 A